Europäisches Patentamt

European Patent Office

Office européen des brevets

(19)

(11) Veröffentlichungsnummer : **0 527 391 B1**

(12) **EUROPÄISCHE PATENTSCHRIFT**

(45) Veröffentlichungstag der Patentschrift :
09.11.94 Patentblatt 94/45

(51) Int. Cl.⁵ : **G11B 5/64**

(21) Anmeldenummer : **92112904.5**

(22) Anmeldetag : **29.07.92**

(54) **Verfahren zur Herstellung von magnetischen Aufzeichnungsmedien.**

(30) Priorität : 10.08.91 DE 4126498
21.04.92 DE 4213060

(43) Veröffentlichungstag der Anmeldung :
17.02.93 Patentblatt 93/07

(45) Bekanntmachung des Hinweises auf die
Patenterteilung :
09.11.94 Patentblatt 94/45

(84) Benannte Vertragsstaaten :
**DE FR GB NL**

(56) Entgegenhaltungen :
**DATABASE WPIL Week 9012, Derwent Publications Ltd., London, GB; AN 90-085964
DATABASE WPIL Week 8118, Derwent Publications Ltd., London, GB; AN 81-31863**

(73) Patentinhaber : **BASF Magnetics GmbH
Dynamostrasse 3
D-68165 Mannheim (DE)**

(72) Erfinder : **Hagemeyer, Alfred, Dr.
An der Froschlache 23
W 6700 Ludwigshafen (DE)**
Erfinder : **Felske, Andreas, Dr.
Kornblumenstrasse 12
W-6737 Boehl-Iggelheim (DE)**
Erfinder : **Hibst, Hartmut, Dr.
Branichstrasse 23
W-6905 Schriesheim (DE)**
Erfinder : **Baeuerle, Dieter, Prof.Dr.
Oberklammerstrasse 47
A-4203 Altenberg (AT)**
Erfinder : **Heitz, Johannes
Haugerweg 38
W-7800 Freiburg (DE)**

(74) Vertreter : **Langfinger, Klaus-Dieter, Dr. et al
BASF Aktiengesellschaft,
Patentabteilung ZDX - C 6
D-67056 Ludwigshafen (DE)**

EP 0 527 391 B1

## Beschreibung

Die Erfindung betrifft ein Verfahren zur Herstellung von magnetischen Aufzeichnungsmedien, im wesentlichen bestehend aus einem polymeren Substrat, gegebenenfalls einer auf der Oberfläche des Substrats aufgebrachten Unterschicht, einer darauf abgeschiedenen kohärenten, ferromagnetischen Metalldünnschicht und gegebenenfalls einer auf der Metallschicht ausgebildeten Schutzschicht.

Magnetische Aufzeichnungsträger, deren magnetische Schicht aus einer kohärenten, ferromagnetischen Metalldünnschicht besteht, sind bekannt. Insbesondere für die magnetische Aufzeichnung bei hohen Frequenzen bzw. hohen Speicherdichten erlangen sie zunehmende Bedeutung, sie sind hierin den konventionellen Medien auf der Basis pigmentierter Magnetschichten überlegen. Ihre Herstellung erfolgt üblicherweise dadurch, daß das schichtbildende ferromagnetische Material, vorzugsweise eine Kobalt-haltige Legierung mit mindestens einem der Legierungszusätze Eisen, Nickel, Chrom und Platin und in einigen Fällen zusätzlich Sauerstoff, durch ein PVD-Verfahren (Physical Vapor Deposition) auf der Fläche eines polymeren Trägermaterials abgeschieden wird. Diese polymeren Trägermaterialien sind vorwiegend flexible Substrate wie sie bereits für Magnetbänder und Disketten zur Anwendung gelangen, vor allem aus Polyethylenterephthalat oder Polyimid aber auch aus Polyethylennaphthalat oder Polysulfon. Bei der Abscheidung dieser kohärenten Metalldünnschichten auf die genannten oder ähnliche polymere Substrate stellen nicht nur die geforderten magnetischen Eigenschaften sowie die mechanische und chemische Stabilität der Metallschicht besondere Anforderungen an die Verfahrensweise, sondern es muß auch eine gute Haftung zwischen einerseits dem Polymermaterial und andererseits der Metalldünnschicht gewährleistet sein. Zudem muß die Metalldünnschicht möglichst zusammenhängend dicht und defektfrei, insbesondere frei von Rissen, Falten und Ablösungen sein sowie ohne größere Aufwölbungen flach aufliegen. Eine rißfreie und glatte Schicht ist insbesondere zur Erzielung eines geringen Verschleißes der Magnetschicht bei der tribologischen Beanspruchung durch den Magnetkopf wesentlich.

Diese Problemfelder dürfen jedoch niemals isoliert betrachtet werden, da eine wie auch immer geartete Optimierung der mechanischen Eigenschaften der zur Diskussion stehenden magnetischen Aufzeichnungsmedien niemals zu Einbußen auf Seiten der magnetischen, d.h. die Informationsspeicherung betreffenden Eigenschaften führen darf. Die Verwendung von Polymersubstraten mit einer definierten Oberflächenrauhigkeit, entstanden durch den Einbau oder das Auftragen von kleinsten Teilchen, ist hierfür zwar gut geeignet, jedoch erfordern diese Substrate besondere und aufwendige Herstelltechniken.

Die anderen an sich bekannten Verfahren der Oberflächenbehandlung von Polymeroberflächen im Plasma, durch Glimmentladung, Coronaentladung, Beflammen, chemisches Ätzen oder Ionenbestrahlung vor dem Metallisieren können nie voll befriedigen. Grund hierfür ist vor allem die nur ungenügende Kontrollierbarkeit der Energieeinwirkung und/oder Restgassteuerung sowie die auftretende Kontamination durch Zersetzungsprodukte.

Die bisher beschriebenen Verfahren der UV-Bestrahlung von Polymeroberflächen mit kontinuierlichen UV-Strahlern wie z.B. Quecksilberdampflampen zur Verbesserung der Lackierbarkeit, der Verbesserung der Bedruckbarkeit von Polyolefinen mittels der Strahlung einer Quecksilberlampe (US-A 4 933 123) und zur Erhöhung der Haftfestigkeit von Klebstoffen auf Polyethylenterephthalatfolien (JP-A 313 850/1989) ergeben bei magnetischen Aufzeichnungsmedien mit kohärenten Metallschichten jedoch nur eine unzureichende Steigerung der Haftung. Aufgrund der langen Bestrahlungszeiten mit kontinuierlichen UV-Lampen in der Größenordnung einiger Minuten ist der Prozeß sehr zeitintensiv und erlaubt keine großen Verarbeitungsgeschwindigkeiten.

Die beschriebenen Verfahren der UV-Bestrahlung von Polymeroberflächen mit Lasern zur Verbesserung der Adhäsion von Farben (EP-A 233 755) sind für die Herstellung von magnetischen Aufzeichnungsmedien mit kohärenten Metallschichten nicht geeignet, da der bei den hohen verwendeten Fluenzen durch die Strahlung induzierte Masseabtrag auf der Oberfläche des Polymeren eine derart ausgeprägte Oberflächenstruktur bewirkt, daß zwar eine verbesserte Haftfestigkeit der aufgebrachten Schichten erreicht, aber gleichzeitig eine Verschlechterung der Speichereigenschaften in Kauf genommen werden muß. Des weiteren ist bekannt, daß auf der Oberfläche von verstreckten PET-Folien durch die Bestrahlung mit einem UV-Excimerlaser eine periodische noppenförmige bzw. walzenförmige Struktur erzeugt werden kann (E. Ahrenholz et al., Appl. Phys. A 53, 330 (1991)). Diese Strukturen treten in einem Energiebereich auf, in dem die Laserbestrahlung zu einem Materialabtrag (Laserablation) führt.

Aufgabe der vorliegenden Erfindung war es daher, ein Verfahren zur Herstellung von magnetischen Aufzeichnungsträgern, bei denen auf einem polymeren Substrat eine kohärente, ferromagnetische Metalldünnschicht ausgebildet ist, bereitzustellen, das die vorgenannten Nachteile nicht aufweist, sich insbesondere durch eine verbesserte Haftfestigkeit der Metallschicht auf dem Trägermaterial auszeichnet, eine gleichmäßige, mechanisch stabile und defektfreie Magnetschicht ohne Risse und innere Spannungen liefert sowie eine

2

Gleichmäßigkeit der Eigenschaften auch auf großen Flächen bei hoher Verfahrensgeschwindigkeit gewährleistet.

Es wurde nun gefunden, daß sich die Aufgabe mit einem Verfahren zur Herstellung von magnetischen Aufzeichnungsmedien, im wesentlichen bestehend aus einem polymeren Substrat, einer auf der Oberfläche des Substrats durch PVD-Verfahren aufgebrachten kohärenten, ferromagnetischen Metalldünnschicht und gegebenenfalls auf der Metallschicht ausgebildeten Schutzschicht lösen läßt, wenn das polymere Substrat vor dem Aufbringen der Metallschicht einer durch den Zerfall von Excimeren erzeugten UV-Strahlung im Wellenlängenbereich von 150 bis 400 nm mit einer Energiedichte unterhalb der Ablationsschwelle ausgesetzt wird.

In einer vorteilhaften Ausgestaltungsform des erfindungsgemäßen Verfahrens wird die UV-Strahlung durch einen UV-Laser als Strahlungsquelle erzeugt, wobei dieser UV-Laser insbesondere ein Excimer-Laser ist, dessen Wellenlänge 248 nm (KrF) oder 308 nm (XeCl) beträgt.

Solche Excimer-Laser sind bekannt. Bei ihrem Einsatz für das erfindungsgemäße Verfahren beträgt die Repetitionsrate zwischen 1 und 1000 Hz, geeignete Pulslängen bewegen sich zwischen 10 ns und 100 ns.

Die gemäß dem erfindungsgemäßen Verfahren vorgenommene Bestrahlung des Substrats im definierten Wellenlängenbereich der UV-Strahlung erfolgt mit einer für das jeweilige polymere Substrat und die verwendete Wellenlänge unterhalb der Ablationsschwelle liegenden Energiedichte. Als Ablationsschwelle wird diejenige Energiedichte bezeichnet, bei der noch keine Ablation auftritt, d.h. bei der noch kein nennenswerter Materialabtrag erfolgt. Zu ihrer Bestimmung werden bei unterschiedlichen Energiedichten die Ablationsraten gemessen. Trägt man die Ablationsraten halblogarithmisch gegen die verwendeten Energiedichten auf, so ist der extrapolierte Schnittpunkt mit der Achse der Energiedichte als Ablationsschwelle definiert. Die Ablationsrate einer UV-Quelle kann beispielsweise dadurch bestimmt werden, daß eine der UV-Strahlung ausgesetzte Lochblende mit einer Linse auf das polymere Substrat abgebildet wird, wobei je nach Energiedichte des UV-Strahls ein rundes Loch unterschiedlicher Tiefe in der Substratfläche entsteht. In besonders einfacher Weise kann die Ablationsschwelle bei Verwendung eines UV-Lasers bestimmt werden. Dazu wird zuerst die gemessene Ätzrate als Verhältnis der jeweiligen Lochtiefe im Substrat zur Pulsanzahl gemessen. Dieser Wert wird gegen den Logarithmus der Energiedichte, d.h. das Verhältnis der Pulsenergie zur Fläche des Lochs im Substrat aufgetragen. Der Schnittpunkt der Extrapolationsgeraden mit der Achse der Energiedichte definiert dann die Schwellenenergiedichte für die Ablation.

Die für das erfindungsgemäße Verfahren geeigneten polymeren Substrate sind bekannt. Es sind vorzugsweise Polyethylenterephthalat (PET), Polyimid (PI), Polyethylennaphthalat (PEN), Polyetheretherketon (PEEK), Polysulfon (PS), Polyethersulfon (PESU), Polyphenylensulfid (PPS) und thermotrope flüssigkristalline Polymere (LCP), wobei insbesondere PET- und PI-Substrate als Trägermaterialien für Metalldünnschichtaufzeichnungsträger herangezogen werden.

Diese Substrate werden nun gemäß dem erfindungsgemäßen Verfahren der UV-Strahlung eines Excimer-Lasers mit einer unter der Ablationsschwelle liegenden Energiedichte ausgesetzt. Diese Schwellenenergiedichte ist wellenlängenabhängig und für die unterschiedlichen polymeren Substrate unterschiedlich. Für PET bewegt sie sich im allgemeinen in einem Bereich zwischen 10 und 200 mJ/cm$^2$. Beispielsweise beträgt die Schwellenenergie für Mylar-PET-Folien bei 248 nm Wellenlänge des Excimerlasers etwa 40 mJ/cm$^2$, während die Schwelle bei 308 nm Wellenlänge bei etwa 170 mJ/cm$^2$ liegt. Im Rahmen einer zweckmäßigen Durchführung des erfindungsgemäßen Verfahrens wird vorzugsweise ein UV-Excimer-Laser eingesetzt und das Trägermaterial mit kleinen Pulszahlen zwischen 1 und 25 Pulsen/Fläche im Vakuum oder in einer Sauerstoff-, Stickstoff-, Argon-, Ammoniak- oder Freon-Atmosphäre (bis zu 1000 mbar) bestrahlt. Die insbesondere bei CoCr-Schichten auftretende Neigung zur Rißbildung läßt sich im Rahmen des erfindungsgemäßen Verfahrens besonders vorteilhaft vermeiden, wenn sich die eingestrahlte Energie im Bereich von 5 mJ/cm$^2$ bis 1000 mJ/cm$^2$ und die Zahl der eingestrahlten Pulse pro Fläche im Bereich von 1 bis 2000 Pulsen bewegt.

Auf ein solchermaßen vorbehandeltes Substrat wird nun in bekannter Vorgehensweise die kohärente ferromagnetische Metalldünnschicht aufgebracht. Geeignete Metallschichten sind im allgemeinen Kobalt-haltig, wie z.B. Co-Ni-Cr, Co-Pt, Co-Ni-O, Co-Cr. Bevorzugt sind Kobalt-Chrom-Schichten mit 15 bis 35 At% Chrom, Kobalt-Nickel-Schichten mit mehr als 10 At% Nickel oder Kobalt-Nickel-Sauerstoff-Schichten mit mehr als 10 At% Nickelanteil und zwischen 3 und 45 At% Sauerstoff. Jedoch sind auch entsprechende Metalldünnschichten auf Basis von Eisen bekannt. Die Herstellung dieser Schichten geschieht mit Hilfe eines PVD-Verfahrens, d.h. z.B. durch Verdampfen, Elektronenstrahlverdampfen, Sputtern, Ionenplattieren oder Beschichtung der Metallkomponenten mit Lichtbogenverfahren. Bevorzugt sind das Aufdampfen und Sputtern. Die auf diese Weise hergestellten ferromagnetischen Metallschichten sind zwischen 20 und 500 nm dick. Im Falle von Unterschichten werden Schichtdicken von 2 bis 500 nm bevorzugt. Als Unterschichten kommen Chrom, Titan, Germanium, Silicium, Wolfram, Platin oder Permalloy in Betracht.

Im Rahmen der Nutzung dieser erfindungsgemäß hergestellten magnetischen Aufzeichnungsträger kann es gegebenenfalls zweckmäßig sein, zur Verbesserung der Abriebs- und Korrosionsstabilität der dünnen Metallschicht, diese mit einer Schutzschicht im Dickenbereich zwischen 1 und 100 nm zu versehen. Bekannt sind hier das Aufbringen einer Kohlenstoffschicht, das oberflächliche Oxidieren der Metallschicht, das Beschichten mit flüssigen Oligomeren meist auf Basis von Fluor-haltigen Polyethern, das Bilden von Oxiden, Nitriden oder Carbiden des Siliciums, Zirkons, Hafniums und Titans oder Kombinationen dieser Maßnahmen.

Die nach dem erfindungsgemäßen Verfahren erhaltenen magnetischen Aufzeichnungsträger zeichnen sich durch eine erhöhte Haftfestigkeit der mechanisch stabilen und defektfreien, d.h. keine Risse und innere Spannungen aufweisenden, Metallschicht auf dem polymeren Substrat aus. Damit wird gleichzeitig auch eine Verringerung des Verschleißes der Magnetschicht bei der tribologischen Beanspruchung durch den Magnetkopf erzielt. Diese Verbesserungen beruhen jedoch nicht auf einer erhöhten mechanischen Verzahnung der Metallschicht auf einer stark aufgerauhten Oberfläche, was eine Verschlechterung der elektromagnetischen Aufzeichnungseigenschaften bewirken würde.

Vorteilhaft ist außerdem die leichte Steuerbarkeit und Kontrollierbarkeit des Substratvorbehandlungsprozesses durch eine externe, d.h. außerhalb des eigentlichen Prozeßraumes, angebrachte Strahlungsquelle.

Sowohl aus diesem Grund als auch in Anbetracht der Vermeidung eines Materialabtrags bei dem Vorgehen gemäß vorliegender Erfindung ergibt sich auch keine Verunreinigung der Apparatur. Des weiteren ist es mit dem erfindungsgemäßen Verfahren wegen des Einsatzes nur kleiner Energien und, bei der Verwendung eines UV-Lasers, auch geringer Pulszahlen möglich, große Flächen bei erhöhtem Durchsatz gleichmäßig zu bestrahlen. Diese Gleichmäßigkeit ist eine gerade für magnetische Aufzeichnungsmedien wichtige Voraussetzung.

Neben der verbesserten Haftung der magnetischen Metalldünnschicht auf dem polymeren Substrat erbrachte die Durchführbarkeit des erfindungsgemäßen Verfahrens einen weiteren überraschenden Vorteil. Die auf den mit der UV-Bestrahlung vorbehandelten polymeren Substrate aufgebrachten Metallschichten waren rißfrei, d.h. beim Aufbringen der Metallschicht auf unbehandelte polymere Trägermaterialien auftretende feine Rißbildung wurde vermieden.

Die Erfindung sei anhand folgender Beispiele näher erläutert.

Beispiel 1 (Vergleichsversuch)

In einer handelsüblichen Aufdampfanlage wurde eine 200 nm dicke $(Co_{80}Ni_{20})$-Schicht mit einem Elektronenstrahlverdampfer auf eine 50 µm dicke PET-Folie (Mylar-Folie der Fa. DuPont) im Hochvakuum aufgedampft. Die PET-Folie wurde vor dem Bedampfen keiner Vorbehandlung unterzogen. Die Haftung der aufgebrachten Magnetschicht wurde im Peeltest zu 0,9 N/cm bestimmt. Dieser Wert entspricht nicht den Anforderungen, die an magnetische Dünnschichtmedien gestellt werden.

Der Peeltest zur Bestimmung der Haftfestigkeit wurde folgendermaßen durchgeführt: Eine EAA-Heißklebefolie (VISTAFIX der Fa. UCB S.A., Gent, Belgien) wurde in einer Thermopresse auf die Metallseite des magnetischen Dünnschichtmediums auflaminiert (105°C, 75 kN/20 cm², 20 s). Das Laminat wurde anschließend in 1 cm breite Streifen geschnitten. Mittels eines doppelseitigen Klebebandes wurde die der EAA-Folie abgewandte Seite, also die Seite der Polymersubstratfolie, auf einen festen Metallträger (Al-Blech) aufgeklebt. In einer Zugmaschine wurde die EAA-Folie mit Zugkräften belastet und die Kraft gemessen, die zum Abschälen der Magnetschicht von dem Polymersubstrat unter einem Winkel von 180° zur Schichtebene nötig ist ("inverser 180°-EAA-Schältest"). Die Abzugsgeschwindigkeit betrug 50 mm/min. Als Maß für die Adhäsion der Magnetschicht auf dem Polymersubstrat wird die auf die Breite des Streifens normierte Schälkraft in N/cm angegeben. Die maximal meßbare Schälkraft und damit die obere Testgrenze liegt bei 4,5 N/cm, oberhalb der die innere Kohäsionskraft der EAA-Folie überschritten wird (vgl. Y. De Puydt et al., Surface Interface Anal. 12 (1988), 486).

Beispiel 2 (Vergleichsbeispiel)

In einer Hochvakuum-Aufdampfanlage wurde eine 50 µm dicke PET-Folie (Mylar-Folie der Fa. DuPont) mit einer kontinuierlichen UV-Lampe bestrahlt und anschließend mit einem Elektronenstrahlverdampfer eine 300 nm dicke $Co_{74}Cr_{26}$-Schicht aufgedampft. Die UV-Bestrahlung der Folie erfolgte mit einer Quecksilberdampflampe (MCX 100 VA, Fa. IST), die sich in etwa 10 cm Abstand befand. Die Strahlung dieser Lampe enthält stärkere Intensitäten im Wellenlängenbereich zwischen 197 und 365 nm.

Die Intensität bei der 254 nm-Linie ist mit 15 mW/cm² spezifiziert (bei 9 A Stromstärke). Bei den anderen Emissionslinien ist die Intensität relativ zu diesem Wert um Faktoren 2 - 100 kleiner. Die Gesamtstrahlungsintensität auf der Folienoberfläche liegt damit etwa zwischen 50 und 100 mW/cm².

Die Mylar-Folie wurde 5 min sowie 10 min lang bestrahlt. Gegenüber der unbestrahlten Referenzprobe ergab sich im Peeltest keine Verbesserung der Haftung, in allen Fällen betrug die Schälkraft 0,2 N/cm.

Beispiel 3

Es wurde wie in Beispiel 1 beschrieben Verfahren, jedoch wurde vor dem Aufbringen der Magnetschicht die PET-Folie in der Hochvakuumanlage durch ein Quarzfenster mit einem Excimer-Laser bei einer Wellenlänge von 248 nm bestrahlt und zwar mit einem Puls/Fläche mit den in der Tabelle angegebenen unterschiedlichen Energiedichten. An den jeweils erhaltenen Mustern wurde die Schälkraft bestimmt.

Beispiel 4

Es wurde wie in Beispiel 3 beschrieben Verfahren, jedoch wurde bei den in der Tabelle angegebenen Energiedichten mit 3 Pulsen/Fläche bestrahlt. Die Ergebnisse sind in der Tabelle angegeben.

Tabelle

| | Energiedichte $[mJ/cm^2]$ | Anzahl Pulse | Schälkraft $[N/cm]$ |
|---|---|---|---|
| Bsp. 1 | 0 | 0 | 0.9 |
| Bsp. 3 | 5 | 1 | 1.6 |
| | 10 | 1 | 3.1 |
| | 15 | 1 | > 4.5 |
| | 20 | 1 | > 4.5 |
| | 39 | 1 | > 4.5 |
| Bsp. 4 | 5 | 3 | 1.2 |
| | 10 | 3 | 2.7 |
| | 15 | 3 | 3.9 |
| | 26 | 3 | > 4.5 |

Beispiel 5

Es wurde wie in Beispiel 1 beschrieben verfahren, jedoch wurde als ferromagnetische Metalldünnschicht eine 200 nm dicke $(Co_{74}Cr_{26})$-Schicht aufgebracht. Während die Haftfestigkeit auf der unbestrahlten PET-Folie (entsprechend Beispiel 1) im Peeltest nur 0,4 N/cm betrug, war sie bei den Proben mit einer Bestrahlung gemäß Beispiel 3, jedoch mit 6 Pulsen/Fläche und einer Energiedichte von 10 $mJ/cm^2$ auf 3,2 N/cm und bei einer Energiedichte von 15 $mJ/cm^2$ auf größer 4,5 N/cm angestiegen.

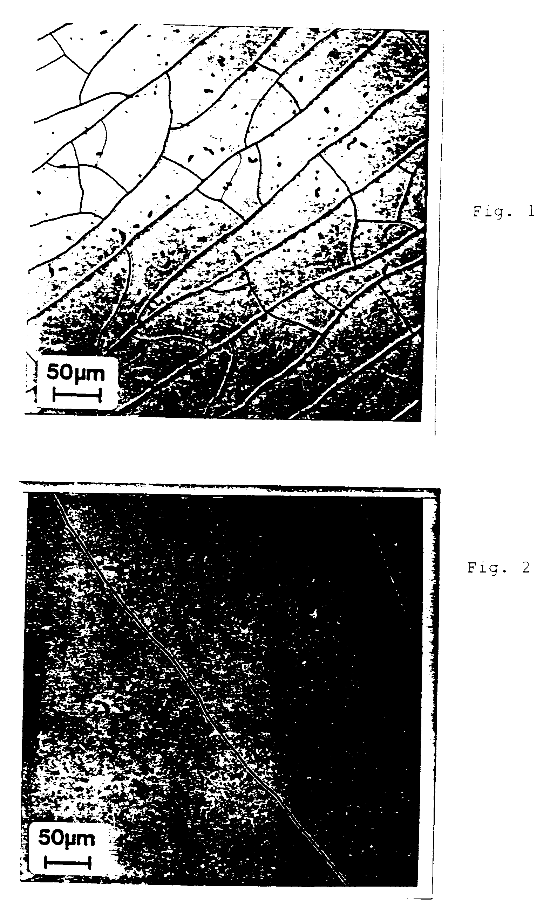

Lichtmikroskopische Aufnahmen der aufgedampften CoCr-Schicht zeigen auf unbestrahlten PET-Substratfolien stark ausgeprägte Risse, die die Schicht durchziehen (Figur 1). Bei der mit 15 $mJ/cm^2$ und 6 Pulsen/Fläche bestrahlten Probe sind die Risse nahezu vollständig verschwunden (Figur 2).

Beispiel 6

Es wurde wie in Beispiel 3 beschrieben verfahren, jedoch wurde die Bestrahlung mit 6 Pulsen/Fläche und einer Energiedichte von 15 $mJ/cm^2$ durchgeführt und die PET-Folie befand sich in einer Atmosphäre von 1000 mbar Stickstoff. Die Haftfestigkeit der anschließend im Vakuum aufgedampften $(Co_{80}Ni_{20})$-Schicht war größer als 4,5 N/cm im Vergleich zu 0,9 N/cm bei der unbehandelten Folie (gemäß Beispiel 1).

**Patentansprüche**

1. Verfahren zur Herstellung von magnetischen Aufzeichnungsmedien, im wesentlichen bestehend aus einem polymeren Substrat, einer auf der Oberfläche des Substrats durch PVD-Verfahren aufgebrachten kohärenten, ferromagnetischen Metalldünnschicht und gegebenenfalls einer auf der Metallschicht ausgebildeten Schutzschicht, dadurch gekennzeichnet, daß das polymere Substrat vor dem Aufbringen der Metallschicht einer durch den Zerfall von Excimeren erzeugten UV-Strahlung im Wellenlängenbereich von 150 bis 400 nm mit einer Energiedichte unterhalb der Ablationsschwelle ausgesetzt wird.

2. Verfahren zur Herstellung von magnetischen Aufzeichnungsmedien, im wesentlichen bestehend aus einem polymeren Substrat, einer auf der Oberfläche des Substrats durch PVD-Verfahren aufgebrachten metallischen Unterschicht und einer kohärenten, ferromagnetischen Metalldünnschicht und gegebenenfalls einer auf der Magnetschicht ausgebildeten Schutzschicht, dadurch gekennzeichnet, daß das polymere Substrat vor dem Aufbringen der Unterschicht einer durch den Zerfall von Excimeren erzeugten UV-Strahlung im Wellenlängenbereich von 150 bis 400 nm mit einer Energiedichte unterhalb der Ablationsschwelle ausgesetzt wird.

3. Verfahren gemäß Anspruch 1 und 2, dadurch gekennzeichnet, daß die UV-Bestrahlung mit einem UV-Excimer-Laser durchgeführt wird.

## Claims

1. A process for the production of a magnetic recording medium, consisting essentially of a polymeric substrate, a coherent, ferromagnetic thin metal layer applied to the surface of the substrate by a PVD method and, if required, a protective layer formed on the metal layer, wherein the polymeric substrate is exposed, before application of the metal layer, to UV radiation having a wavelength of from 150 to 400 nm, generated by the decomposition of excimers and having an energy density below the ablation threshold.

2. A process for the production of a magnetic recording medium, consisting essentially of a polymeric substrate, a metallic underlayer applied to the surface of the substrate by a PVD method and a coherent, ferromagnetic thin metal layer and, if required, a protective layer formed on the magnetic layer, wherein the polymeric substrate is exposed, before application of the underlayer, to UV radiation having a wavelength of from 150 to 400 nm, generated by the decomposition of excimers and having an energy density below the ablation threshold.

3. A process as claimed in claim 1 or 2, wherein the UV irradiation is carried out using a UV excimer laser.

## Revendications

1. Procédé de fabrication de supports magnétiques d'enregistrement constitués essentiellement d'un substrat polymère, d'une couche mince métallique ferromagnétique cohérente appliquée sur ce substrat par dépôt physique en phase vapeur et éventuellement d'une couche protectrice formée sur cette couche métallique, caractérisé par le fait qu'on soumet le substrat polymère, avant d'y appliquer la couche métallique, à un rayonnement UV, produit par la décomposition d'excimères, dans le domaine de longueurs d'onde de 150 à 400 nm avec une densité d'énergie inférieure au seuil d'ablation.

2. Procédé de fabrication de supports magnétiques d'enregistrement constitués essentiellement d'un substrat polymère, d'une sous-couche métallique appliquée sur ce substrat par dépôt physique en phase vapeur, d'une couche mince métallique ferromagnétique cohérente et éventuellement d'une couche protectrice formée sur cette couche magnétique, caractérisé par le fait qu'on soumet le substrat polymère, avant d'y appliquer la sous-couche, à un rayonnement UV, produit par la décomposition d'excimères, dans le domaine de longueurs d'onde de 150 à 400 nm avec une densité d'énergie inférieure au seuil d'ablation.

3. Procédé selon les revendications 1 et 2, caractérisé par le fait qu'on effectue l'irradiation UV avec un laser à excimères UV.

Fig. 1

Fig. 2